# FASCICULE DE BREVET EUROPEEN

(11) **EP 2 656 107 B1**
(45) Date de publication et mention de la délivrance du brevet: **01.04.2015**
(21) Numéro de dépôt: 11811041.0
(22) Date de dépôt: 07.12.2011
(51) Int. Cl.: B60W 30/12

(54) **PROCÉDÉ DE CONTRÔLE D'UNE FONCTION D'AIDE AU SUIVI D'UNE VOIE DE CIRCULATION COMPRENANT DEUX LIGNES**
VERFAHREN ZUR ÜBERWACHUNG EINER FUNKTION ZUR UNTERSTÜTZUNG DER FOLGE EINER FAHRSPUR MIT ZWEI LINIEN
METHOD OF SUPERVISING A FUNCTION FOR AIDING THE FOLLOWING OF A TRAFFIC LANE COMPRISING TWO LINES

(30) Priorité: 21.12.2010 FR 1060971
(43) Date de publication de la demande: 30.10.2013
(73) Titulaire: Peugeot Citroën Automobiles SA, 78140 Vélizy Villacoublay (FR)
(72) Inventeur: CAMPO, Marc, F-92320 Chatillon (FR)
(86) Numéro de dépôt international: PCT/FR2011/052892
(87) Numéro de publication internationale: WO 2012/085385

(56) Documents cités:
- EP-A2- 0 697 641
- WO-A1-99/44173
- CN-A- 1 775 601
- JP-A- 10 047 922
- US-A1- 2007 276 599
- US-B1- 7 050 908

## Description

La présente invention concerne un procédé de contrôle d'une fonction d'aide au suivi d'une voie de circulation, ainsi qu'un système de direction et un véhicule automobile comportant un tel procédé de contrôle.

Les véhicules automobiles comportent un volant fixé sur une colonne du système de direction, qui est manoeuvré par le conducteur pour braquer les roues directrices de ce véhicule. Les systèmes de direction comprennent habituellement un dispositif d'assistance qui génère une partie de l'énergie nécessaire pour braquer les roues, de manière à réduire l'effort que doit délivrer le conducteur, en particulier dans les manoeuvres aux basses vitesses et à l'arrêt.

De plus, certains systèmes de direction comportent une fonction d'aide à la conduite (« PFIL », « LKS », « LKAS »), pilotant par un calculateur de contrôle une motorisation qui agit sur cette direction, en délivrant un couple d'assistance spécifique sur la direction pour réaliser une aide au suivi de la voie de circulation, qui signale au conducteur un écart par rapport à cette voie.

Pour ce type de fonction, le véhicule comporte un moyen de détection de la voie de circulation, en particulier une caméra identifiant les deux lignes tracées au sol qui délimitent cette voie, pour situer le véhicule par rapport aux limites latérales de la voie de circulation. Le véhicule comporte aussi des capteurs délivrant des informations sur la dynamique de ce véhicule, en particulier sur la vitesse longitudinale et la vitesse de lacet.

La fonction d'aide au suivi de voie reçoit des informations de la caméra et des différents capteurs, pour réaliser un asservissement du couple délivré par la motorisation. La motorisation, qui peut comporter en particulier un moteur électrique ou des vérins hydrauliques utilisés par le dispositif d'assistance, génère un couple dans un sens ou dans l'autre sur le système de direction, qui signale au conducteur une sortie de la voie de circulation ou un risque de sortie.

Un problème qui se pose alors, est que les informations délivrées par la caméra de détection pour les deux lignes latérales, peuvent ne pas être cohérentes entre elles.

Une fonction d'aide au suivi de voie connue, présentée notamment par le document US-A1-2004/0102884, réalise un suivi des deux lignes latérales qui bordent généralement la voie de circulation, avec la possibilité de n'utiliser qu'une seule de ces lignes quand un problème de détection de l'autre ligne se pose.

On connaît également du document US7050908 un procédé permettant de robustifier la fonction d'aide au suivi de voie, conforme au préambule de la revendication 1.

Cependant, ces documents ne décrivent pas de procédés, permettant d'améliorer la sécurité et de détecter des défaillances.

La présente invention a notamment pour but d'éviter ces inconvénients de la technique antérieure, et d'apporter une solution simple et fiable permettant en particulier de vérifier la cohérence des informations de suivi des deux lignes bordant une voie de circulation.

Elle propose à cet effet un procédé de contrôle pour une fonction d'aide au suivi de la voie de circulation d'un véhicule automobile, conforme à la partie caractérisante de la revendication 1.

Un avantage de ce procédé de contrôle, est que l'on peut à partir des valeurs estimées de chaque ligne ainsi obtenues, effectuer en les comparants entre elles et avec les valeurs nominales, un contrôle de cohérence entre ces différentes valeurs qui peut déceler un dysfonctionnement du système.

De plus le procédé de contrôle selon l'invention peut comporter une ou plusieurs des caractéristiques suivantes, qui peuvent être combinées entre elles.

Avantageusement, le procédé de contrôle effectue ensuite une comparaison des valeurs nominales, avec les valeurs estimées de chacune des lignes tracées au sol, pour faire converger ces différentes séries de valeurs.

En cas de non convergence, le procédé peut analyser les données pour détecter un dysfonctionnement causé par une défaillance d'un élément du système, comme une des caméras par exemple.

L'invention a aussi pour objet un système de direction d'un véhicule automobile comportant une fonction d'aide au suivi de voie, qui est mise en oeuvre par un procédé de contrôle comprenant l'une quelconque des caractéristiques précédentes.

L'invention a de plus pour objet un véhicule automobile comprenant un système de direction comportant une fonction d'aide au suivi de voie, qui est mise en oeuvre par un procédé de contrôle comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma d'un système de direction comprenant le procédé de contrôle selon l'invention ;
- la figure 2 est un schéma général de ce procédé de contrôle ; et
- la figure 3 est un schéma fonctionnel de ce procédé de contrôle.

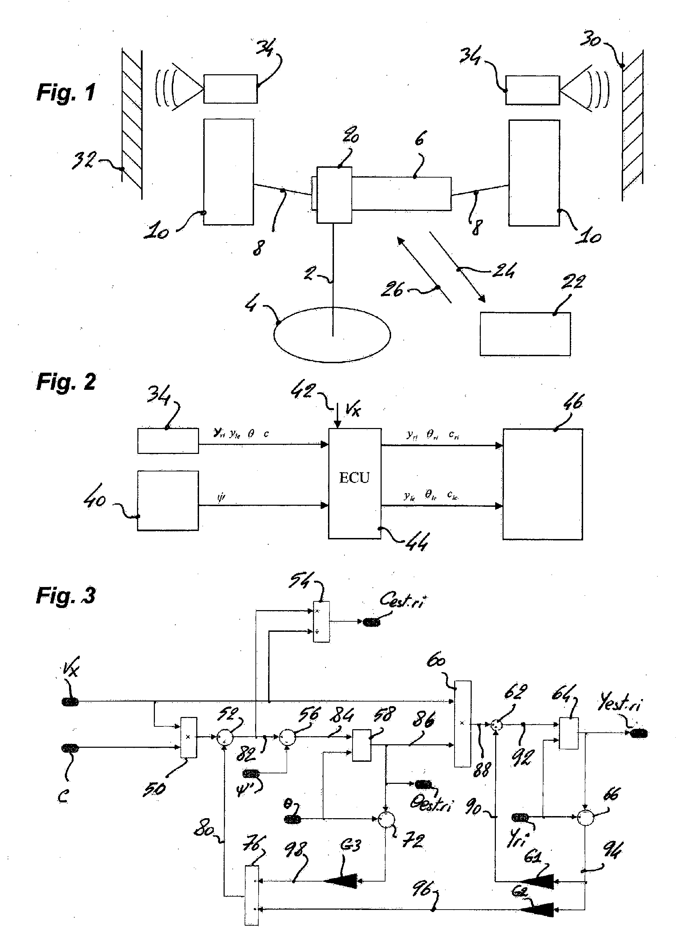

La figure 1 présente un système de direction actif 1 comprenant une colonne de direction 2 reliant un volant 4 fixé à son extrémité supérieure, à un boîtier de direction 6 fixé à son extrémité inférieure.

Le boîtier de direction 6 comporte un mécanisme de transformation du mouvement, comme une crémaillère, qui à partir d'une rotation du volant 4, applique un mouvement transversal à deux biellettes 8 situées à ses extrémités. Les biellettes 8 réalisent un braquage des roues avant 10, en faisant pivoter les moyeux de chaque roue autour d'un axe sensiblement vertical.

Le boîtier de direction 6 comporte une motorisation 20 pour appliquer un effort sur le mécanisme de ce boîtier, qui tend à entraîner la rotation du volant 4, ainsi que le braquage des roues 10 correspondant.

En particulier, la motorisation 20 réalise une assistance conventionnelle de la direction du véhicule, en délivrant une part complémentaire de l'effort de braquage, à partir d'une manoeuvre effectuée par le conducteur sur le volant 4.

Le système de direction 1 comporte de plus une fonction automatique d'aide au suivi de la voie de circulation, réalisant une aide à la conduite gérée par un calculateur de contrôle 22 qui permet en asservissant la motorisation 20, de moduler le couple d'assistance délivré sur le système de direction, pour signaler au conducteur un écart par rapport à la voie de circulation suivie, et aider au retour vers cette voie.

De chaque côté du véhicule, une caméra de suivi de voie 34 fixée sur ce véhicule, film en permanence une ligne blanche latérale tracée au sol 30, 32 qui borde la voie de circulation du véhicule, pour délivrer des données 24 au calculateur de contrôle 22.

On peut ainsi en analysant les données 24 délivrées par les caméras 34, ainsi que d'autres données sur la dynamique du véhicule, détecter un écart par rapport à la voie de circulation qui n'est pas demandé par le conducteur.

La fonction d'aide au suivi de voie réalise alors un asservissement de la motorisation 20, qui applique le couple demandé sur le boîtier de direction 6 afin de délivrer au conducteur une aide pour revenir dans cette voie.

La figure 2 présente un calculateur de contrôle 44 mettant en oeuvre le procédé de contrôle selon l'invention, recevant à partir des caméras 34 les valeurs nominales suivantes qui servent habituellement pour la fonction d'aide au suivi de voie, afin d'établir la trajectoire souhaitée du véhicule :
Yri = position latérale de la ligne droite 30
Yle = position latérale de la ligne gauche 32
Θ = angle de cap nominal de la voie
C = courbure nominale de la route, calculée généralement sur la ligne extérieure de la courbe.

Le calculateur de contrôle 44 reçoit de même à partir de capteurs du véhicule 40, 42, les données suivantes :
Vx = vitesse longitudinale du véhicule
Ψ' = vitesse de lacet du véhicule

Le calculateur de contrôle 44 calcule ensuite à partir de ces différentes données reçues, pour la ligne droite 30 les valeurs estimées suivantes :
Yest. ri = position latérale estimée de la ligne droite 30
Θest. ri = angle de cap estimé de la ligne droite 30
Cest. ri = courbure estimée de la ligne droite 30

De la même manière, le calculateur de contrôle 44 calcule pour la ligne gauche 32 les valeurs estimées suivantes :
Yest. le = position latérale estimée de la ligne gauche 32
Θest. le = angle de cap estimé de la ligne gauche 32
Cest. le = courbure estimée de la ligne gauche 32

Le procédé de contrôle effectue ensuite une comparaison 46 des valeurs nominales de trajectoire du véhicule, avec les valeurs estimées de chacune des lignes tracées au sol 30, 32, pour faire converger ces différentes séries de valeurs.

Dans le cas où les valeurs convergent, ce qui traduit une cohérence entre ces valeurs, le procédé de contrôle affine ainsi les valeurs nominales qui établissent la trajectoire demandée au véhicule pour la fonction d'aide au suivi de voie, afin de préciser cette trajectoire.

Les écarts résiduels entre les valeurs nominales et les valeurs estimées de chaque ligne 30, 32, peuvent résulter des imprécisions du modèle de calcul, ou d'une petite différence d'évolution des lignes droite 30 et gauche 32.

Dans le cas où les valeurs ne convergent pas, le procédé de contrôle peut détecter un dysfonctionnement qui peut être causé notamment par une défaillance d'un élément du système, comme une des caméras 34. On peut aussi en déduire que la dynamique de la voie de circulation est trop élevée, avec des rayons de courbure trop faibles ou des successions de virages trop rapprochées, qui ne peuvent être pris en compte par le modèle de calcul établi. On peut en déduire par ailleurs que les lignes au sol convergent ou divergent.

On augmente ainsi la sécurité de manière simple par ce procédé de contrôle, en améliorant la précision de calcul de trajectoire pour la fonction d'aide au suivi de voie, ou en détectant des défaillances du système. On peut en particulier mettre en oeuvre le procédé de contrôle avec le calculateur de contrôle 22 de la fonction de suivi de voie, afin d'utiliser des composants existants et de réduire les coûts.

La figure 3 présente un schéma fonctionnel pour le procédé de contrôle, permettant de réaliser le calcul des valeurs estimées Yest. ri, Θest. ri et Cest. ri pour la ligne droite 30, et d'établir la convergence avec les valeurs nominales Yri, Θri et Cri.

Le procédé de contrôle multiplie 50 d'abord la vitesse longitudinale Vx par la courbure C, puis le résultat est comparé 52 à une première valeur 80 venant d'une boucle de retour, la différence donnant une deuxième valeur 82.

Il divise ensuite 54 cette deuxième valeur 82 par la vitesse longitudinale Vx, le résultat donnant la courbure estimée Cest. ri de la ligne droite 30.

La deuxième valeur 82 est comparée 56 avec la vitesse de lacet Ψ', la différence donnant une troisième valeur 84 qui est entrée avec l'angle de cap nominal Θ dans un amplificateur opérationnel 58, pour obtenir une quatrième valeur 86 qui est l'angle de cap estimé Θest. ri de la ligne droite 30 ;

La quatrième valeur 86 est multipliée 60 par la vitesse longitudinale Vx pour obtenir une cinquième valeur 88, qui est comparée 62 avec une sixième valeur 90, la différence donnant une septième valeur 92.

La septième valeur 92 est ensuite entrée avec la position nominale Yri de la ligne droite 30 dans un amplificateur opérationnel 64, pour donner la position estimée Yest. ri de cette ligne droite ;

La position estimée Yest. ri de la ligne concernée 30 est comparée 66 à sa position nominale Yri, la différence donnant une huitième valeur 94 qui est multipliée par un premier gain G1 pour donner la sixième valeur 90. En parallèle, la huitième valeur 94 est multipliée par un deuxième gain G2, pour donner une neuvième valeur 96.

Par ailleurs, la quatrième valeur 86 est comparée 72 avec l'angle de cap nominal Θ, puis la différence est multipliée par un troisième gain G3 pour donner une dixième valeur 98.

La neuvième 96 et la dixième valeur 98 sont enfin additionnées 76, pour donner la première valeur 80 de la boucle de retour.

Le procédé de contrôle met en oeuvre un schéma équivalent pour les calculs liés à la ligne gauche 32, de manière à effectuer la convergence des valeurs nominales de trajectoire du véhicule avec les valeurs estimées des deux lignes droite 30 et gauche 32.

## Revendications

1. Procédé de contrôle pour une fonction d'aide au suivi de la voie circulation d'un véhicule automobile, comprenant d'une part des moyens de détection (34) de lignes latérales (30, 32) tracées au sol des deux côtés de cette voie de circulation, pour délivrer les positions latérales nominales de chaque ligne (Yri, Yle), et d'autre part des capteurs (40, 42) de la dynamique du véhicule qui délivrent la vitesse longitudinale (Vx) et la vitesse de lacet (Ψ') de ce véhicule, **caractérisé en ce qu'**il calcule à partir des valeurs nominales de l'angle de cap (Θ) et de la courbure moyenne (C) de cette voie de circulation, les valeurs estimées individuellement pour chacune de ces lignes latérales, de courbure (Cest. ri, Cest. le), d'angle de cap (Θest. ri, Θest. le), et de position latérale de cette ligne (Yest ri., Yest. le) en mettant en oeuvre les étapes suivantes en parallèle pour chacune des lignes (30, 32) :
- il multiplie (50) la vitesse longitudinale (Vx) par la courbure (C), puis le résultat est comparé (52) à une première valeur (80) venant d'une boucle de retour, la différence donnant une deuxième valeur (82) ;
- il divise ensuite (54) cette deuxième valeur (82) par la vitesse longitudinale (Vx), le résultat donnant la courbure (Cest.) estimée de la ligne concernée ;
- la deuxième valeur (82) est comparée (56) avec la vitesse de lacet (Ψ'), la différence donnant une troisième valeur (84) qui est entrée avec l'angle de cap nominal (Θ) dans un amplificateur opérationnel (58), pour obtenir une quatrième valeur (86) qui est l'angle de cap estimé (Θest.) de la ligne concernée ;
- la quatrième valeur (86) est multipliée (60) par la vitesse longitudinale (Vx) pour obtenir une cinquième valeur (88), qui est comparée (62) avec une sixième valeur (90), la différence donnant une septième valeur (92) ;
- la septième valeur (92) est ensuite entrée avec la position nominale (Y) de la ligne concernée dans un amplificateur opérationnel (64), pour donner la position estimée (Yest.) de cette ligne ;
- la position estimée (Yest.) de la ligne concernée (30) est comparée (66) à sa position nominale (Y), la différence donnant une huitième valeur (94) qui est multipliée par un premier gain (G1) pour donner la sixième valeur (90), en parallèle la huitième valeur (94) est multipliée par un deuxième gain (G2), pour donner une neuvième valeur (96) ;
- par ailleurs, la quatrième valeur (86) est comparée (72) avec l'angle de cap nominal (Θ), puis la différence est multipliée par un troisième gain (G3) pour donner une dixième valeur (98) ;
- la neuvième (96) et la dixième valeur (98) sont enfin additionnées (76), pour donner la première valeur (80) de la boucle de retour.

2. Procédé de contrôle selon la revendication 1, **caractérisé en ce qu'**il effectue ensuite une comparaison (46) des valeurs nominales (Θ, C, Y), avec les valeurs estimées (Θest., Cest., Yest.) de chacune de ces lignes tracées au sol (30, 32), pour faire converger ces différentes séries de valeurs.

3. Procédé de contrôle selon la revendication 2, **caractérisé en ce qu'**en cas de non convergence, le procédé analyse les données pour détecter un dysfonctionnement causé par une défaillance d'un élément du système, comme une des caméras (34) par exemple.

4. Système de direction pour un véhicule automobile comportant une fonction d'aide au suivi de voie, **caractérisé en ce que** cette fonction est mise en oeuvre par un procédé de contrôle réalisé selon l'une quelconque des revendications précédentes.

5. Véhicule automobile comprenant un système de direction comportant une fonction d'aide au suivi de voie, selon la revendication 4.

## Patentansprüche

1. Steuerverfahren für eine Unterstützungsfunktion der Überwachung einer Fahrspur eines Kraftfahrzeugs, das einerseits Erfassungsmittel (34) seitlicher Linien (30, 32), die auf dem Boden zu beiden Seiten dieser Fahrspur gezeichnet sind, aufweist, um seitliche Nennpositionen jeder Linie (Yri, Yle) zu liefern, und andererseits Fühler (40, 42) der Dynamik des Fahrzeugs, die die Längsgeschwindigkeit (Vx) und die Giergeschwindigkeit (Ψ') dieses Fahrzeugs liefern, **dadurch gekennzeichnet, dass** es ausgehend von den Nennwerten des Kurswinkels (Θ) und der mittleren Krümmung (C) dieser Fahrspur die einzelnen geschätzten Werte für jede dieser seitlichen Linien, der Krümmung (Cest. ri, Cest. le), des Kurswinkels (Θest. ri, Θest. le) und der seitlichen Position dieser Linie (Yest. ri, Yest. le) berechnet, indem die folgenden Schritte parallel für jede der Linie (30, 32) umgesetzt werden:
- es multipliziert (50) die Längsgeschwindigkeit (Vx) mit der Krümmung (C), dann wird das Resultat mit einem ersten Wert (80), der von einer Rücklaufschleife kommt, verglichen (52), wobei der Unterschied einen zweiten Wert (82) ergibt,
- es dividiert (54) anschließend diesen zweiten Wert (82) durch die Längsgeschwindigkeit (Vx), wobei das Resultat die geschätzte Krümmung (Cest.) der betroffenen Linie ergibt,
- der zweite Wert (82) wird mit der Giergeschwindigkeit (Ψ') verglichen (56), wobei der Unterschied einen dritten Wert (84) ergibt, der mit dem Nennkurswinkel (Θ) in einen operativen Verstärker (58) eingegeben wird, um einen vierten Wert (86) zu erzielen, der der geschätzte Kurswinkel (Θest.) der betroffenen Linie ist,
- der vierte Wert (86) wird mit der Längsgeschwindigkeit (Vx) multipliziert (60), um einen fünften Wert (88) zu erzielen, der mit einem sechsten Wert (90) verglichen wird (62), wobei der Unterschied einen siebten Wert (92) ergibt,
- der siebte Wert (92) wird dann mit der Nennposition (Y) der betroffenen Linie in einen operativen Verstärker (64) eingegeben, um die geschätzte Position (Yest.) dieser Linie zu ergeben,
- die geschätzte Position (Yest.) der betroffenen Linie (30) wird mit ihrer Nennposition (Y) verglichen (66), wobei der Unterschied einen achten Wert (94) ergibt, der mit einer ersten Verstärkung (G1) multipliziert wird, um den sechsten Wert (90) zu ergeben, parallel dazu wird der achte Wert (94) mit einer zweiten Verstärkung (G2) multipliziert, um einen neunten Wert (96) zu ergeben,
- ferner wird der vierte Wert (86) mit dem Nennkurswinkel (Θ) verglichen (72), dann wird der Unterschied mit einer dritten Verstärkung (G3) multipliziert, um einen zehnten Wert (98) zu ergeben,
- der neunte (96) und der zehnte Wert (98) werden schließlich addiert (76), um den ersten Wert (80) der Rücklaufschleife zu ergeben.

2. Steuerverfahren nach Anspruch 1, **dadurch gekennzeichnet, dass** es anschließend einen Vergleich (46) der Nennwerte (Θ, C, Y) mit den geschätzten Werten (Θest., Cest., Yest.) jeder der auf dem Boden gezeichneten Linien (30, 32) ausführt, um diese unterschiedlichen Werteserien konvergieren zu lassen.

3. Steuerverfahren nach Anspruch 2, **dadurch gekennzeichnet, dass** das Verfahren im Fall des Nichtkonvergierens die Daten analysiert, um eine Funktionsstörung zu erfassen, die durch ein Versagen eines Elements, wie zum Beispiel einer der Kameras (34), verursacht wird.

4. Lenksystem für ein Kraftfahrzeug, das eine Unterstützungsfunktion der Fahrspurüberwachung aufweist, **dadurch gekennzeichnet, dass** diese Funktion durch ein Steuerverfahren umgesetzt wird, das nach einem der vorhergehenden Ansprüche ausgeführt wird.

5. Kraftfahrzeug, das ein Lenksystem aufweist, das eine Funktion zur Fahrspurüberwachung nach Anspruch 4 aufweist.

## Claims

1. A method of supervising for a function for aiding the following of the traffic lane of a motor vehicle, comprising on the one hand means (34) for detecting lateral lines (30, 32) traced on the ground on the two sides of this traffic lane, so as to deliver the nominal lateral positions of each line (Yri, Yle), and on the other hand sensors (40, 42) of the dynamics of the vehicle which deliver the longitudinal speed (Vx) and the rate of yaw (Ψ') of this vehicle, **characterized in that** it calculates on the basis of the nominal values of the angle of heading (Θ) and of the mean curvature (C) of this traffic lane, the values estimated individually for each of these lateral lines, of curvature (Cest. ri, Cest. le), of angle of heading (Θest. ri, Θest. le), and of lateral position of this line (Yest. ri., Yest. le), implementing the following steps in parallel for each of the lines (30, 32):
- it multiplies (50) the longitudinal speed (Vx) by the curvature (C), then the result is compared (52) to a first value (80) originating from a return loop, the difference giving a second value (82);
- it then divides (54) this second value (82) by the longitudinal speed (Vx), the result giving the estimated curvature (Cest.) of the line concerned;
- the second value (82) is compared (56) with the rate of yaw (Ψ'), the difference giving a third value (84) which is entered with the nominal angle of heading (Θ) in an operational amplifier (58), to obtain a fourth value (86) which is the estimated angle of heading (Θest.) of the line concerned;
- the fourth value (86) is multiplied (60) by the longitudinal speed (Vx) to obtain a fifth value (88), which is compared (62) with a sixth value (90), the difference giving a seventh value (92);
- the seventh value (92) is then entered with the nominal position (Y) of the line concerned in an operational amplifier (64), to give the estimated position (Yest.) of this line;
- the estimated position (Yest.) of the line concerned (30) is compared (66) to its nominal position (Y), the difference giving an eighth value (94) which is multiplied by a first gain (G1) to give the sixth value (90), in parallel the eighth value (94) is multiplied by a second gain (G2), to give a ninth value (96);
- furthermore, the fourth value (86) is compared (72) with the nominal angle of heading (Θ), then the difference is multiplied by a third gain (G3) to give a tenth value (98);
- the ninth (96) and tenth (98) value are finally added (76) to give the first value (80) of the return loop.

2. The method of supervising according to Claim 1, **characterized in that** it then carries out a comparison (46) of the nominal values (Θ, C, Y) with the estimated values (Θest., Cest., Yest.) of each of these lines traced on the ground (30, 32), to cause these different series of values to converge.

3. The method of supervising according to Claim 2, **characterized in that** in the case of non-convergence, the method analyses the data to detect a malfunction caused by a failure of an element of the system, such as one of the cameras (34) for example.

4. A steering system for a motor vehicle comprising a function for aiding the following of a lane, **characterized in that** this function is implemented by a method of supervising realized according to any one of the preceding claims.

5. A motor vehicle including a steering system comprising a function for aiding the following of a lane, according to Claim 4.
